(19) Europäisches Patentamt
European Patent Office
Office européen des brevets

(11) Veröffentlichungsnummer : **0 085 831**
**B1**

(12) # EUROPÄISCHE PATENTSCHRIFT

(45) Veröffentlichungstag der Patentschrift : **13.04.88**

(51) Int. Cl.⁴ : **C 07 F 7/18**, C 09 K 3/10

(21) Anmeldenummer : **83100152.4**

(22) Anmeldetag : **11.01.83**

(54) **Organosilanester mit Glycoletherresten.**

(30) Priorität : **04.02.82 DE 3203688**

(43) Veröffentlichungstag der Anmeldung : **17.08.83 Patentblatt 83/33**

(45) Bekanntmachung des Hinweises auf die Patenterteilung : **13.04.88 Patentblatt 88/15**

(84) Benannte Vertragsstaaten : **BE DE FR GB NL**

(56) Entgegenhaltungen :
**AT-B- 298 506**
**DE-A- 2 525 883**
**DE-C- 1 186 061**
**DE-C- 2 743 691**
**Die Akte enthält technische Angaben, die nach dem Eingang der Anmeldung eingereicht wurden und die nicht in dieser Patentschrift enthalten sind.**

(73) Patentinhaber : **Hüls Troisdorf Aktiengesellschaft**
**Postfach 11 65**
**D-5210 Troisdorf (DE)**

(72) Erfinder : **Hanisch, Horst, Dr.**
**Fröbelweg 19**
**D-5202 Hennef/Sief (DE)**

**EP 0 085 831 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind neue Organosilanester, die Dichtungsmassen eine verbesserte Wirksamkeit verleihen. Die verbesserte Wirksamkeit zeigt sich insbesondere bei Dichtungsmassen auf Polyurethan-Basis, deren Haft- und Dehnverhalten durch den Zusatz dieser neuen Silane erheblich verbessert wird.

Es sind Organosilanester bekannt, deren organofunktionelle Gruppe einen, ggf. substituierten Amino-, Mercapto- oder Glycidylrest besitzen, und die als siliciumfunktionelle Estergruppierung Alkoxyreste enthalten, deren Alkylgruppierung nicht durch Sauerstoffatome unterbrochen ist. Beispiele für diese bekannten organofunktionellen Silanester sind γ-Aminopropyltriethoxysilan, N-β-aminoethyl-γ-aminopropyltrimethoxysilan, γ-Mercaptopropyltrimethoxysilan oder γ-Glycidyloxypropyltrimethoxysilan.

Diese bekannten Organosilanester erhöhen bekannterweise die Haftung zwischen verschiedenen Polymeren und anorganischen, oxidischen oder metallischen Substraten, wie z. B. Glas, Beton oder Aluminium. Aufgrund dieser haftungsverbessernden Eigenschaften ist es auch schon vorgeschlagen worden, diese Silanester in Polyurethan-Dichtungsmassen einzusetzen. Beim Einsatz dieser bekannten Organosilanester in Polyurethan-Dichtungsmassen hat sich jedoch als nachteilig erwiesen, daß sich die Wirksamkeit erst nach längerer Zeit nach der Verarbeitung voll entfaltet.

Es sind aus der DE-C-11 86 061 auch schon Organosilanester bekannt, deren Estergruppierung eine einzige Diethylenglykolethergruppe umfaßt (vgl. AT-B-298506 oder DE-A-25 25 883). Auch Organosilane mit solchen Estergruppen zeigen beim Einsatz in Polyurethan-Dichtungsmassen schlechte mechanische Eigenschaften. In der DE-C-11 86 061 werden Organosilanester beschrieben, die zwar auch eine Diethylenglykolestergruppierung besitzen, deren organofunktionelle Gruppe jedoch über ein Sauerstoffatom mit dem Siliciumatom verbunden ist. Die dort beschriebenen Verbindungen sind dickflüssige Öle, die zwar mit Isocyanaten reagieren, über deren Verhalten in Polyurethan-Dichtungsmassen in diesem Schutzrecht jedoch nichts ausgesagt wird.

Es bestand deshalb die Aufgabe, organofunktionelle Silanester aufzufinden, die insbesondere in Polyurethan-Dichtungsmassen möglichst schnell nach der Verarbeitung ihre volle Wirksamkeit entfalten.

In Erfüllung dieser Aufgabe wurden nun Organosilanester der Formel $Y—(CH_2)_n—Si(CH_3)_mX_pZ_{3-(m+p)}$ gefunden, wobei in der Formel Y für einen Rest aus der Gruppe NHR (R = H oder $C_{1-6}$-Alkyl oder Phenyl oder $—(CH_2)_2—NH_2$), —SH oder 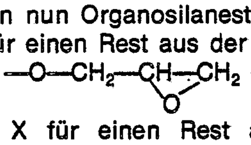 oder die Gruppierung $—NH—(CH_2)_2—NH—(CH_2)_2—NH_2$ steht, X für einen Rest aus der Gruppe $—OCH_3$, $—OC_2H_5$ und $—OC_3H_7$ steht, Z für den Rest $—O—(CH_2—CH_2—O)_q—R'$ steht, wobei eines der H-Atome durch eine Methylgruppe ersetzt sein kann, q die Werte 2 oder 3 annehmen kann und R' für einen Alkylrest mit 1 bis 4 C-Atomen steht und m die Werte 0 oder 1 oder 2, n die Werte 1 oder 2 oder 3 und p die Werte 0 oder 1 annehmen kann, mit der Bedingung, daß $m + p \leq 2$ sein soll.

Diese neuen Silanester erzielen in Polyurethan-Dichtungsmassen bereits kurze Zeit nach der Verarbeitung sehr hohe Haft- und Dehnungswerte, die überraschenderweise doppelt so hoch sein können als beim Einsatz bekannter Organosilanester.

Die neuen Organosilanester können in an sich bekannter Weise durch Umesterung bekannter Organosilanester mit Di- oder Triethylenglykolethern hergestellt werden. Der Ethylenglykolether wird dabei zweckmäßigerweise im Überschuß eingesetzt; es ist jedoch auch möglich, mit äquimolaren Mengen zu arbeiten. Die Umesterung erfolgt vorteilhaft bei erhöhter Temperatur, zweckmäßigerweise bei der Siedetemperatur des Reaktionsgemisches, wobei man den abgespaltenen einfachen Alkohol abdestillieren läßt.

Die Umesterung kann bei der Herstellung von erfindungsgemäßen Aminoalkylsilanestern in Abwesenheit von Umesterungskatalysatoren durchgeführt werden, um ausreichende Ausbeuten zu erhalten. Bei der Herstellung von den erfindungsgemäßen Mercapto- und Glycidyloxyalkylsilanestern empfiehlt sich die Zugabe von an sich bekannten Umesterungskatalysatoren, wie z. B. Titansäureestern, um ausreichende Ausbeuten an den erfindungsgemäßen Produkten zu bekommen.

Das Umesterungsprodukt enthält neben einem geringen Anteil an nicht umgesetzten Glykolether überwiegend das vollständig umgeesterte Organosilan. Je nach Reaktionsführung und dem eventuell gewählten Überschuß an Glykolethern entstehen jedoch auch die partiellen Organosilanester der Glykolether. Eine destillative Trennung der partiellen Ester von den Triestern der Glykolether ist prinzipiell möglich; für die genannten Anwendungszwecke, besonders für den Einsatz in Polyurethan-Dichtungsmassen, ist diese Trennung jedoch nicht notwendig.

Als Ausgangsprodukte zur Herstellung der erfindungsgemäßen Glykolester eignen sich die korrespondierenden organofunktionellen Trialkoxysilane, wobei die Alkoxygruppe vorzugsweise eine Methoxy- oder Ethoxygruppe ist. Es ist auch möglich, die entsprechenden Organochlorsilane als Ausgangsprodukte einzusetzen und diese direkt, nach an sich bekannten Verfahren, mit den Glykolethern zu verestern. Bei den Aminosilanestern kann ein H-Atom der Aminogruppe durch einen Alkyl- oder einen, gegebenenfalls alkylsubstituierten Aminoalkylrest substituiert sein. Als Beispiel sei die Verbindung $H_2N—(CH_2)_2—NH—(CH_2)_2—NH—(CH_2)_3Si(OCH_3)_3$ genannt.

Als Glykolether, die bei der Herstellung der erfindungsgemäßen Produkte eingesetzt werden können,

werden die Di- und Triethylen- oder propylen-glykolmonoether eingesetzt, deren Etherreste 1 bis 4 C-Atome aufweisen. Beispiele für solche Glykolether sind : Diethylenglykolmonomethylether, Diethylenglykolmonoethylether, Diethylenglykolmono-n-butylether, Triethylenglykolmonoethylether, Triethylenglykolmono-n-butylether sowie Isomere des Dipropylenglykolmonomethylethers und Dipropylenglykolmonoiso-propylether.

Die organofunktionelle Gruppe der neuen Silanester ist vorzugsweise durch drei $CH_2$-Gruppen von dem Si-Atom getrennt. Die Zahl des Methylengruppen kann jedoch auch geringer sein, wenn als Ausgangsprodukt z.B. β-Aminoethyltrimethoxysilan eingesetzt wird.

Die Verwendung der neuen Verbindungen erfolgt entweder als Additiv in den Polymeren, deren Haftungseigenschaften verbessert werden sollen oder durch Auftragen auf die mit Polymeren zu behandelnde Oberfläche. Bei der Verwendung als Additiv setzt man sie den Polymeren, z.B. in den Dichtungsmassen, in einer Menge von etwa 0,5 bis 1,5 Gew.-% zu. Es ist jedoch auch möglich, die Verbindungen vor ihrem Einsatz in Polymeren erst mit hochreaktiven organischen Verbindungen umzusetzen und dann das Umsetzungsprodukt als Addukt einzusetzen.

Die Vorbehandlung von Substraten mit den erfindungsgemäßen Verbindungen erfolgt entweder in organischen Lösungsmitteln oder als wässrige Hydrolysate. Die Konzentration solcher Lösungen oder Hydrolysate ist nicht kritisch. Im allgemeinen wird ein Organosilanester-Gehalt zwischen 1 und 5 Gew.-% gewählt.

Die neuen Organosilanester lassen sich überraschenderweise besonders gut als wässrige Hydrolysate einsetzen, da solche Hydrolysate sehr stabil sind. Diese Hydrolysate sind auch leicht herstellbar, da die erfindungsgemäßen Verbindungen in Wasser viel schneller als die bekannten Organosilanester unter Hydrolyse in Lösung gehen. Aufgrund dieser guten Hydrolyseeigenschaften können die vorliegenden Verbindungen auch in wässrigen Salzlösungen einwandfrei hydrolysiert werden. Selbst Hydrolysate, die mit einer 15 % igen wässrigen Ammoniumsulfatlösung hergestellt werden, sind weit über 14 Tage stabil.

Als Substrate, die mit den erfindungsgemäßen Verbindungen vorbehandelt werden können, eignen sich eine große Zahl von anorganisch oxidischen Materialien, wie z.B. Glas in seinen verschiedenen Verarbeitungsformen, Keramik, Beton, Ziegel oder Metalle wie Aluminium, Magnesium, Kupfer oder Legierungen, die diese Metalle enthalten. Auch mineralische insbesondere silikatische Füllstoffe und anorganische Pigmente, wie Eisenoxide, $TiO_2$ oder $ZnO_2$, können mit den erfindungsgemäßen Verbindungen vorbehandelt werden. Die genannte Vorbehandlung der Substrate erfolgt zum Zwecke der Haftungsverbesserung der Substrate mit diversen Polymeren. Es ist damit z.B. möglich, Fasern, Füllstoffe oder Pigmente besser in Polymere einzubinden, als es ohne Zusatz dieser Verbindungen möglich ist. Diese verbesserte Wirkung zeigt sich bereits, wenn auf die genannten Substrate nur 0,1 Gew.-% der erfindungsgemäßen Silane aufgebracht sind.

## Beispiel 1

Umesterung von γ-Aminopropyltrimethoxysilan mit Diethylenglykolmonomethylether.

In einer Standapparatur, die mit Innenthermometer, Rückflußkühler mit Calciumchlorid-Rohr und Rührer versehen ist, wurden 412 g (2,3 Mol) γ-Aminopropyltrimethoxysilan vorgelegt und 1 242 g (10,35 Mol = 50 % Überschuß) Diethylenglykolmonomethylether zugemischt. Der Reaktionsansatz wurde zwei Stunden am Rückfluß erhitzt, wobei die Siedetemperatur bei etwa 110 °C lag.

Nach Abkühlen des Reaktionsansatzes wurde der Rückflußkühler durch eine Destillationsbrücke ersetzt. Zunächst wurde bei Normaldruck der bei der Reaktion freigesetzte Methylalkohol und anschließend, nach erneutem Abkühlen, im Vakuum von etwa 10 mbar nicht umgesetzter Diethylenglykolmonomethylether bis zu einer Innentemperatur von 130 °C abdestilliert.

Es wurden 979 g eines Rohproduktes erhalten, das noch etwa 13 Gew.-% Diethylenglykolmonomethylether enthielt. Das Umesterungsprodukt besteht zu etwa 75 % aus Tris [-2-2-methoxy-ethoxy)-ethoxy] silyl-3-aminopropan der Formel $H_2N—CH_2—CH_2—CH_2—Si[O(CH_2—CH_2O_2)CH_3]_3$, die durch Gaschromatographie und Massenspektrometrie bestätigt wurde. Daneben wurden überwiegend die korrespondierenden Mono- und Di- [2-(2-methoxy-ethoxy)-ethoxy] silyl-Verbindungen erhalten.

## Beispiel 2

Wie im Beispiel 1 wurden 221 g (1 Mol) γ-Aminopropyltriethoxysilan mit 540 g (4,5 Mol = 50 % Überschuß) Diethylenglykolmonomethylether umgeestert. Der Reaktionsansatz wurde zwei Stunden am Rückfluß erhitzt. Die Siedetemperatur lag bei etwa 135 °C.

Analog Beispiel 1 wurde daraufhin zuerst das freigesetzte Ethanol unter Normaldruck und darauf der überschüssige und nicht umgesetzte Diethylenglykolmonoethylether im Vakuum von etwa 10 mbar bis zu einer Sumpftemperatur von 130 °C abdestilliert.

Das auf diese Weise erhaltene Rohprodukt (405 g) enthielt noch 49 g des Diglykolethers und 75 g (17 Gew.-%) der Di [2-(2-methoxy-ethoxy)-ethoxy] silyl-Verbindung. Es wurden etwa 315 g des Tri [2-(2-methoxy-ethoxy)-ethoxy] silyl-3-aminopropans erhalten, dessen Formel gaschromatographisch und massenspektrometrisch nachgewiesen wurde.

Beispiel 3

Umesterung von γ-Aminopropyltriethoxysilan mit Diethylenglykolmonoethylether.

Wie im Beispiel 1 wurden 122 g (0,55 Mol) γ-Aminopropyltriethoxysilan mit 332 g (2,48 Mol = 50 % Überschuß) Diethylenglykolmonoethylether umgeestert. Der Reaktionsansatz wurde zwei Stunden am Rückfluß erhitzt. Die Siedetemperatur lag zu Beginn bei 160 °C und fiel im Verlauf der Reaktion auf 125 °C ab.

Anschließend wurde nach dem Abkühlen das freigesetzte Ethanol und der überschüssige Glykolether analog Beispiel 1 bis zu einer Sumpftemperatur von 120 °C abdestilliert. Es wurden 231 g eines Rohprodukts erhalten, das zu etwa 45 % aus Tris [2-(2-ethoxy-ethoxy)-ethoxy] silyl-3-aminopropan der Formel $H_2N—CH_2—CH_2—CH_2—Si[O(CH_2—CH_2—O)_2C_2H_5]_3$ besteht, die durch Gaschromatographie und massenspektrometrisch bestätigt wurde. In dem Rohprodukt sind weiterhin zu insgesamt etwa 35 Gew.-% die entsprechenden Mono- und Diglykoletherester des Aminosilans enthalten.

Beispiel 4

Umesterung von γ-Aminopropyltriethoxysilan mit Triethylenglykolmonoethylether.

Wie im Beispiel 1 wurden 133 g (0,6 Mol) γ-Aminopropyltriethoxysilan mit 481 g (2,7 Mol = 50 % Überschuß) Triethylenglykolmonoethylether umgeestert. Der Reaktionsansatz wurde 2 Stunden am Rückfluß erhitzt. Die Siedetemperatur lag bei etwa 140 °C.

Das Abdestillieren des freigesetzten Ethanols sowie des nicht umgesetzten Glykolethers erfolgte analog Beispiel 1 bis zu einer Sumpftemperatur von 170 °C.

Der verbleibende Rückstand von 330 g enthielt etwa 155 g Umesterungsprodukt der Formel $H_2N—CH_2—CH_2—CH_2—Si[O—(CH_2—CH_2—O)_3—C_2H_5]_3$ sowie die entsprechenden mono- und diumgeesterten Silylverbindungen. Der Glykolanteil lag bei etwa 20 Gew.-%.

Beispiel 5

Umesterung von γ-Aminopropyltriethoxysilan mit Triethylenglykolmonoethylether.

Wie im Beispiel 1 wurden 177 g (0,8 Mol) γ-Aminopropyltriethoxysilan mit 427 g (2,4 Mol) Triethylenglykolmonoethylether umgeestert. Dem Reaktionsgemisch wurden 2 g Ethyltitanat als Katalysator zugesetzt. Es wurde vier Stunden am Rückfluß erhitzt, wobei die Siedetemperatur bei etwa 124 °C lag.

Das Abdestillieren des Ethanols und des überschüssigen Glykolethers erfolgte in der Weise, daß das Reaktionsgemisch entsprechend Beispiel 1 zuerst bis zu einer Innentemperatur von 160 °C unter Normaldruck erhitzt wurde und anschließend nach vorhergehendem Abkühlen im Vakuum von 10 mbar auf eine Sumpftemperatur von etwa 150 °C erhitzt wurde.

Es wurden 482 g eines Rohprodukts erhalten, das zu 50 Gew.-% aus dem gleichen Triester wie im Beispiel 4 bestand.

Beispiel 6

Umesterung von γ-Aminopropylmethyldiethoxysilan mit Diethylenglykolmonomethylether.

Wie im Biespiel 1 wurden 191 g (1 Mol) γ-Aminopropylmethyldiethoxysilan mit 360 g (3 Mol = 50 % Überschuß) Diethylenglykolmonomethylether umgeestert. Der Reaktionsansatz wurde zwei Stunden am Rückfluß erhitzt. Die Siedetemperatur lag zu Beginn bei 125 °C und fiel im Verlauf der Reaktion auf 120 °C ab.

Anschließend wurden der abgespaltene Ethylalkohol sowie nicht umgesetzter Diethylenglykolmonomethylether analog Beispiel 1 abdestilliert, wobei das Abdestillieren des Glykolethers bis zu einer Sumpftemperatur von 140 °C durchgeführt wurde. Es wurden 298 g eines gelben Rohproduktes erhalten, das noch etwa 3 % an Glykolether enthielt.

Bei dieser Arbeitsweise fiel Bis [2-(2-methoxy-ethoxy)-methoxy] methylsilyl-3-aminopropan der Formel $H_2N—CH_2—CH_2—CH_2—Si(CH_3)[O—(CH_2—CH_2—O)_2—CH_3]_2$ in einer Ausbeute von etwa 12 % an ; das korrespondierende mono-umgeesterte Produkt wurde zu etwa 70 % erhalten.

Beispiel 7

Umesterung von N-Methyl-γ-aminopropyltrimethoxysilan mit Diethylenglykolmonomethylether.

Wie im Beispiel 1 wurden 290 g (1,5 Mol) N-Methyl-γ-aminopropyltrimethoxysilan mit 810 g (6,75 Mol = 50 % Überschuß) Diethylenglykolmonomethylether umgeestert. Der Reaktionsansatz wurde während zwei Stunden am Rückfluß erhitzt. Die Siedetemperatur lag zu Beginn bei 115 °C und fiel im Verlauf der

Reaktion auf 105 °C ab.

Nach erfolgter Umsetzung wurde analog Beispiel 1 der freigesetzte Alkohol und der Glykolether bis zu einer Sumpftemperatur von 130 °C abdestilliert. Das in einer Menge von 658 g anfallende Rohprodukt bestand zu etwa 67 % aus Tris [2-(2-methoxy-ethoxy)-ethoxy] silyl-3 N-methylaminopropan der Formel $NH(CH_3)—CH_2—CH_2—CH_2—Si[O(CH_2—CH_2O)_2CH_3]_3$, die gaschromatographisch und massenspektrometrisch bestätigt wurde. Das Rohprodukt enthielt ferner etwa 70 g nicht abdestillierten Glykolether und partiell umgeesterte Produkte.

Beispiel 8

Umesterung von γ-Mercaptopropyltrimethoxysilan mit Diethylenglykolmonomethylether.

Wie im Beispiel 1 wurden 157 g (0,8 Mol) γ-Mercaptopropyltrimethoxysilan mit 432 g (3,6 Mol = 50 % Überschuß) Diethylenglykolmonomethylether umgeestert. Der Reaktionsansatz wurde während zwei Stunden am Rückfluß erhitzt. Die Reaktion wurde mit 1 g Ethyltitanat katalysiert. Die Siedetemperatur lag bei 106 °C.

Die Abdestillation des abgespaltenen Methanols und des Glucolethers erfolgte unter den gleichen Bedingungen wie im Beispiel 1 mit dem Unterschied, daß beim Abdestillieren des Glykolethers die Innentemperatur bis 140 °C gesteigert wurde. Es wurden 353 g eines Rohproduktes erhalten, das zu etwa 85 Gew.-% aus Tris [2-(2-methoxy-ethoxy)-ethoxy] silyl-3-mercaptopropan der Formel $HS—CH_2—CH_2—CH_2—Si[O(CH_2—CH_2—O)_2CH_3]_3$ bestand, die gaschromatographisch bestätigt wurde. Das Rohprodukt enthielt fernerhin noch etwa 35 g Glykolether.

Beispiel 9

Umesterung von γ-Glycidyloxypropyltrimethoxysilan mit Diethylenglykolmonomethylether.

In der in Beispiel 1 genannten Apparatur wurden 118 g (0,5 Mol) γ-Glycidyloxypropyltrimethoxysilan mit 180 g (1,5 Mol) Diethylenglykolmonomethylether während 8 Stunden in Gegenwart von 1 g Ethyltitanat als Katalysator bei 70 °C gerührt. Der dabei freiwerdende Methylalkohol sowie überschüssiger Glykolether wurden anschließend, nach Abkühlen auf Raumtemperatur und Austausch des Rückflußkühlers durch eine Destillationsbrücke, im Vakuum von 10 mbar abdestilliert. Die Innentemperatur wurde dabei nur bis auf 75 °C erhöht und bei dieser Temperatur während einer Stunde gehalten. Es wurde ein Rohprodukt mit einer Ausbeute von 98 Gew.-% erhalten.

Beispiel 10

Nach der deutschen Patentschrift Nr. 25 21 841 wurd eine einkomponentige Polyurethan-Dichtungsmasse aus folgenden Komponenten hergestellt :

80 Teile lineares Isocyanatpräpolymeres
205 Teile verzweigtes Isocyanatpräpolymeres
120 Teile latenter Härter
100 Teile hydrophobierte Kieselsäure
550 Teile Diisodecylphthalat
380 Teile Kreide
100 Teile Shellsot T

Proben dieser Dichtungsmasse wurden wie folgt modifiziert :

Probe 1 : Vergleichsprobe ; kein Silanzusatz
Probe 2 : Dichtungsmasse mit Zusatz von 0,8 Gew.-% γ-Aminopropyltriethoxysilan
Probe 3 : Dichtungsmasse mit 0,8 Gew.-% des Silanesters aus Beispiel 1.

Mit diesen Proben wurden zwei Betonprüfkörper mit den Abmessungen 50 × 15 × 25 im Abstand von 15 mm miteinander verklebt. Die Probekörper wurden bei 23 °C und 50 % rel.

Luftfeuchte gelagert. Nach 2,5 und 7 Tagen wurde der Zugversuch nach DIN 52455 durchgeführt. Es wurden folgende Meßwerte erhalten :

(Siehe Tabelle Seite 6 f.)

| Dichtungsmasse | Lagerzeit in Tagen | Dehnung in % | Zugfestigkeit $N/cm^2$ |
|---|---|---|---|
| Probe 1 | 2 | 0 | 0 |
| Probe 2 | 2 | 250 | 20,3 |
| Probe 3 | 2 | 350 | 20,0 |
| Probe 1 | 5 | 0 | 0 |
| Probe 2 | 5 | 190 | 23 |
| Probe 3 | 5 | 355 | 46 |
| Probe 1 | 7 | 0 | 0 |
| Probe 2 | 7 | 150 | 21,3 |
| Probe 3 | 7 | 370 | 50,4 |

**Patentanspruch**

Organosilanester der Formel

$$Y—(CH_2)_n—Si(CH_3)_mX_pZ_{3-(m+p)},$$

in der

Y für einen Rest aus der Gruppe NHR (R = H oder $C_{1-6}$-Alkyl oder Phenyl oder $—(CH_2)_2—NH_2$), —SH oder $—O—CH_2—$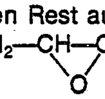 oder die Gruppierung $—NH—(CH_2)_2—NH—(CH_2)_2—NH_2$ steht,

X für einen Rest aus der Gruppe $—OCH_3$, $—OC_2H_5$ und $—OC_3H_7$ steht,

Z für den Rest $—O—(CH_2—CH_2—O)_q—R'$ steht, wobei eines der H-Atome durch eine Methylgruppe ersetzt sein kann, q die Werte 2 oder 3 annehmen kann und R' für einen Alkylrest mit 1 bis 4 C-Atomen steht,

m die Werte 0 oder 1 oder 2,

n die Werte 1 oder 2 oder 3 und

p die Werte 0 oder 1 annehmen kann mit der Bedingung, daß $m + p \leq 2$ sein soll.

**Claim**

Organosilane ester of the formula

$$Y—(CH_2)_n—Si(CH_3)_mX_pZ_{3-(m+p)},$$

in which

Y stands for a residue from the group NHR (R = H or $C_{1-6}$-alkyl or phenyl or $—(CH_2)_2—NH_2$), —SH or $—O—CH_2—$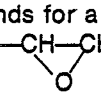 or the grouping $—NH—(CH_2)_2—NH—(CH_2)_2—NH_2$,

X stands for a residue from the group $—OCH_3$, $—OC_2H_5$ and $—OC_3H_7$,

Z stands for the residue $—O—(CH_2—CH_2—O)_q—R'$, wherein one of the H-atoms can be replaced by a methyl group, q can assume the values 2 or 3 and R' stands for an alkyl residue with 1 to 4 C atoms,

m can assume the value 0 or 1 or 2,

n can assume the value 1 or 2 or 3 and

p can assume the value 0 or 1, with the condition that $m + p$ is to be $\leq 2$.

**Revendication**

Esters d'organosilanes de formule

$$Y—(CH_2)_n—Si—(CH_3)_mX_pZ_{3-(m+p)}$$

dans laquelle

Y représente un reste du groupe NHR (R = H, un alkyle en $C_1$ à $C_6$, un phényle ou $(CH_2)_2—NH_2$), —SH ou $—O—CH_2—$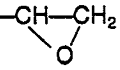 ou le groupement $—NH—(CH_2)_2—NH—(CH_2)_2—NH_2$,

X représente un reste choisi dans le groupe $—OCH_3$, $—OC_2H_5$ $—OC_3H_7$,

Z représente le reste $—O—(CH_2—CH_2—O)_q—R'$, auquel cas un des atomes H peut être remplacé par un groupe méthyle, q peut prendre la valeur 2 ou 3 et R' représente un reste alkyle avec 1 à 4 atomes de C,

m peut prendre la valeur 0, 1 ou 2,

n la valeur 1, 2 ou 3 et

p la valeur 0 ou 1, à condition que $m + p \leq 2$.